# FASCICULE DE BREVET EUROPEEN

(11) **EP 2 580 120 B1**
(45) Date de publication et mention de la délivrance du brevet: **23.04.2014**
(21) Numéro de dépôt: 11735475.3
(22) Date de dépôt: 09.06.2011
(51) Int. Cl.: B64D 27/26

(54) **TURBOMOTEUR FIXÉ À UN PYLÔNE DU FUSELAGE D'UN AÉRONEF PAR UNE SUSPENSION A SECURITE INTEGREE**
TRIEBWERKVERBINDUNG MIT AUSFALLSICHERUNG
FAILS-SAFE JET ENGINE JOINT

(30) Priorité: 14.06.2010 FR 1054689
(43) Date de publication de la demande: 17.04.2013
(73) Titulaire: Snecma, 75015 Paris (FR)
(72) Inventeur: BELLABAL, François, F-77300 Fontainebleau (FR); SEIZE, Guilhem, F-91100 Corbeil-essonnes (FR); VINCENT, Thomas, F-91120 Palaiseau (FR)
(74) Mandataire: Gevers France
(86) Numéro de dépôt international: PCT/FR2011/051322
(87) Numéro de publication internationale: WO 2011/157931

(56) Documents cités:
- WO-A1-99/06732
- FR-A1- 2 917 713
- GB-A- 1 236 917
- US-A- 4 571 936

## Description

La présente invention concerne une suspension d'un turbomoteur ou analogue à un pylône d'aéronef permettant d'assurer en toute sécurité l'accrochage de celui-ci à la structure de l'aéronef.

Le terme suspension désigne, de façon générale, l'ensemble des différentes pièces nécessaires à la fixation du turbomoteur au pylône, telles que notamment les attaches, articulations, axes, rotules, biellettes, bras, viroles, ferrures, etc.... que l'on trouve usuellement à cet effet.

Généralement, la suspension est située et contenue dans des plans spécifiques du turbomoteur, qui sont parallèles entre eux et perpendiculaires à l'axe longitudinal de celui-ci. Ainsi, elle se compose au moins d'un plan de suspension avant situé au niveau d'un carter intermédiaire du turbomoteur et reliant celui-ci à la poutre d'accrochage en caisson du pylône, et d'un plan de suspension arrière situé au niveau du carter d'échappement du turbomoteur et reliant celui-ci à la poutre du pylône. En outre, en plus de ces deux plans de suspension avant et arrière, la suspension dans sa globalité comprend des moyens de reprise de poussée définis par des bielles quand le turbomoteur est accroché sous l'aile de l'aéronef comme l'enseigne le document GB 1 236 917, ou par un carter externe structural (en anglais « outer fan duct ») quand le turbomoteur est accroché au fuselage conformément à l'invention. L'agencement de la suspension a notamment pour but de reprendre les efforts s'exerçant selon les trois directions ou axes (roulis, tangage, lacet) d'un référentiel orthonormé lié à l'aéronef, ainsi que les moments selon ces trois axes.

Par ailleurs, l'invention concerne plus particulièrement la sécurité de la suspension composée notamment de ses plans avant et arrière. Aussi, en plus du doublement usuel de certaines des pièces énumérées ci-dessus à des fins de sécurité, la suspension peut comprendre un plan supplémentaire de suspension dit à sécurité intégrée (en anglais fail-safe) prévu entre les plans avant et arrière, parallèlement à ces derniers. Ce plan de suspension intermédiaire a pour but en particulier de reprendre le moment des efforts autour de l'axe de lacet du référentiel (moment de dérapage) en cas d'une rupture du plan de suspension arrière, notamment lorsque le turbomoteur se trouve à l'arrière du fuselage de l'aéronef, proche de sa paroi avec les risques de perforation de celle-ci par des débris du turbomoteur et de la suspension. Ainsi, le turbomoteur est-il maintenu sensiblement en place malgré cette rupture de suspension arrière.

Ce plan de suspension intermédiaire à sécurité intégrée, disposé proche du plan de suspension arrière, contient une bielle reliant le turbomoteur à la poutre du pylône. La bielle est montée avec suffisamment de jeu formant un espace libre pour qu'aucun effort n'y transite tant que la suspension arrière reste fonctionnelle et intacte, de façon que les déplacements et vibrations engendrés par le turbomoteur lors de son fonctionnement et l'aéronef n'agissent pas sur la bielle. Ce plan de suspension intermédiaire se trouve donc en attente.

Bien qu'apportant une sécurité renforcée en cas de rupture de la suspension arrière avec un tel montage avec jeu, en fonctionnement normal la bielle de liaison risque de heurter l'attache avec le turbomoteur ou le pylône à cause des vibrations et autres déplacements produits engendrés par le fonctionnement de celui-ci.

Par ailleurs, lors de l'installation, le moteur étant déjà soutenu par les suspensions de manière au moins isostatique, le montage d'une bielle supplémentaire en attente classique demande des tolérances fines dans son positionnement. A cela s'ajoute l'espace restreint entre le turbomoteur et le pylône qui rend le montage de la bielle compliqué.

La présente invention a pour but de pallier les inconvénients ci-dessus et concerne un turbomoteur fixé à un pylône du fuselage d'un aéronef par l'intermédiaire d'une suspension comprenant, perpendiculairement à l'axe longitudinal du turbomoteur, un plan de suspension avant situé au niveau d'un carter intermédiaire du turbomoteur et reliant celui-ci au pylône, un plan de suspension arrière situé au niveau du carter d'échappement du turbomoteur et reliant celui-ci au pylône, et un plan de suspension intermédiaire à sécurité intégrée, situé entre les plans avant et arrière et comportant au moins une bielle de liaison entre le turbomoteur à carter externe structural et le pylône, montée avec un jeu prédéterminé sur le turbomoteur rendant inopérante la bielle de liaison tant que la suspension du plan arrière fonctionne. Le turbomoteur est remarquable, selon l'invention, par le fait que la bielle de liaison du plan de suspension intermédiaire est agencée entre le carter externe structural et le pylône, et qu'un élément réalisé en un matériau souple est associé à ladite bielle de liaison de manière à introduire, par son caractère élastiquement déformable, ledit jeu prédéterminé.

Ainsi, l'élément souple selon l'invention, dont l'élasticité intrinsèque détermine le jeu, permet d'éviter à la bielle de venir directement au contact du turbomoteur et d'être isolée de celui-ci tant que la suspension du plan arrière est opérationnelle, et cela malgré les vibrations engendrées. En effet, le déplacement relatif entre les deux extrémités de liaison (points d'attache avec le turbomoteur et le pylône du fuselage) de la bielle est rendu possible par l'élément souple élastiquement déformable. Un effort transite dans cette bielle, mais son impact sur les charges de dimensionnement des suspensions est négligeable (de l'ordre de 0.01 %). De cette manière, l'effort transitant dans la bielle du troisième plan intermédiaire est suffisamment faible pour ne pas remettre en cause les charges de dimensionnement des suspensions. En revanche, lors de la défaillance du plan de suspension arrière, le jeu de sécurité introduit par l'élément souple est supprimé, la bielle étant en butée entre ses deux extrémités en jouant son rôle de maintien du turbomoteur et de reprise du moment de dérapage.

Par exemple, le matériau souple de l'élément est un élastomère ou analogue, du type silicone thermiquement résistant (<150°C).

Dans un premier mode de réalisation, ledit élément souple introduisant le jeu prédéterminé présente une forme cylindrique annulaire et est logé dans l'une des extrémités de la bielle de liaison, articulée à une attache complémentaire de l'un du turbomoteur ou du pylône. On remarque la simplicité de réalisation de l'élément souple conférant à celui-ci une fiabilité appréciable.

De préférence, l'extrémité de la bielle de liaison portant l'élément souple annulaire est articulée autour d'un axe à la chape de l'attache solidaire du turbomoteur, tandis que son extrémité opposée est articulée par une rotule à une attache du pylône. L'attache à chape est celle du carter externe structural du turbomoteur situé sur le fuselage arrière d'un avion, et l'agencement d'une rotule permet à la bielle d'agir selon son axe.

Avantageusement, la bielle de liaison est démontable et se compose alors de deux parties distinctes respectivement articulées au turbomoteur et au pylône et reliées entre elles de façon axialement réglable. Ainsi, non seulement cela facilite le montage de la bielle dans l'espace confiné entre le turbomoteur et le pylône, mais également permet d'adapter parfaitement l'entraxe de la bielle à la distance séparant les attaches correspondantes du turbomoteur et du pylône.

Par exemple, la liaison alignée et réglable entre les deux parties de la bielle est obtenue par une bague externe de vissage entourant les extrémités en regard des deux parties de la bielle.

Dans un second mode de réalisation, ledit élément souple introduisant le jeu prédéterminé est intégré à la bielle de liaison, de manière à permettre une libre variation de longueur de celle-ci, correspondant au jeu prédéterminé. Ainsi, le déplacement relatif entre les extrémités de la bielle, sans mettre en butée celle-ci, tant que le plan de suspension arrière est actif, est fourni par l'élément souple à débattement axial parallèlement à la bielle. Un effort transite dans cette bielle, mais son impact sur les charges de dimensionnement des suspensions est négligeable (de l'ordre de 0.01 %). De cette manière, l'effort transitant dans la bielle du troisième plan intermédiaire est suffisamment faible pour ne pas remettre en cause les charges de dimensionnement des suspensions.

La longueur de la bielle est alors toujours adaptée à la distance séparant les attaches du moteur et du pylône.

Dans ce second mode de réalisation, la bielle de liaison se compose alors de deux parties tubulaires télescopiques entre lesquelles est agencé l'élément souple de forme cylindrique annulaire et qui sont articulées à leurs extrémités opposées, respectivement au turbomoteur et au pylône.

En particulier, l'élément souple peut se présenter sous la forme de couches cylindriques concentriques autorisant le libre coulissement axial des deux parties tubulaires l'une par rapport à l'autre et la variation de longueur de la bielle, correspondant au jeu prédéterminé souhaité, entre des butées axiales prévues sur lesdites parties. Les couches peuvent être obtenues par l'enroulement de l'élément souple sous forme d'une bande ou par plusieurs manchons emboîtés les uns dans les autres pour former l'élément souple à couches multiples concentriques.

Egalement, pour faciliter le montage de la bielle et son réglage, au moins l'une des parties tubulaires de la bielle de liaison est démontable et est constituée d'une sous-partie d'extrémité apte à être fixée à une attache du turbomoteur et d'une sous-partie de paroi latérale, annulaire, lesdites sous-parties d'extrémité et de paroi étant reliées l'une à l'autre par une bague externe de vissage.

Les figures du dessin annexé feront bien comprendre comment l'invention peut être réalisée. Sur ces figures, des références identiques désignent des éléments semblables.
La figure 1 est une vue de dessus d'un aéronef équipé de turbomoteurs situés à l'arrière de son fuselage.
Les figures 2 et 3 montrent schématiquement l'un des turbomoteurs de l'aéronef fixé au pylône d'accrochage du fuselage par l'intermédiaire de la suspension de l'invention, respectivement sans et avec rupture du plan de suspension arrière.
La figure 4 représente, en coupe axiale, un premier mode de réalisation de la bielle de liaison du plan de suspension intermédiaire à sécurité intégrée de la suspension.
Les figures 5 et 6 représentent, en demi-coupe axiale, un second mode de réalisation de la bielle de liaison respectivement dans ses positions d'extension axiale minimale et maximale.
La figure 7 représente, toujours en demi-coupe axiale, la bielle démontée du second mode de réalisation.

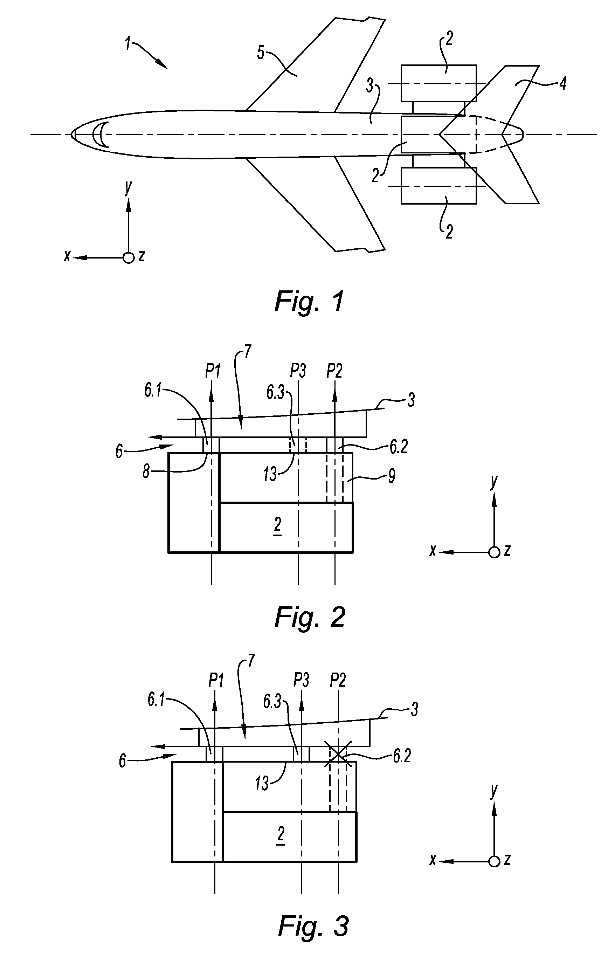

L'aéronef 1 représenté en vue de dessus sur la figure 1 comprend, pour sa poussée, des turbomoteurs 2 (tels que des turboréacteurs) qui sont préférentiellement, selon l'invention, montés le long du fuselage 3 de l'aéronef, à l'arrière de celui-ci, respectivement de part et d'autre du plan longitudinal de symétrie de l'aéronef et au dessus du fuselage près de l'empennage arrière 4 dans ledit plan.

Bien entendu, l'invention pourrait s'appliquer à des turbomoteurs situés sous les ailes de l'aéronef ; cependant, elle est davantage destinée à des turbomoteurs implantés au niveau du fuselage de l'aéronef en raison des conséquences d'une rupture de la suspension arrière comme on l'a rappelé précédemment.

Aussi, pour assurer le montage et la fixation de chaque turbomoteur au fuselage, une suspension 6 est prévue jouant le rôle d'interface entre ceux-ci. Pour cela, comme le montrent schématiquement les figures 1 et 2, la suspension 6 est disposée entre un pylône de renfort 7 à poutre d'accrochage en caisson, solidaire de la paroi structurelle du fuselage 3, et des carters externes ou analogues 8, 9 du turbomoteur. Généralement, la suspension 6 se présente dans des plans de suspension avant P1 et arrière P2 parallèles entre eux et perpendiculaires à l'axe longitudinal du turbomoteur. Par rapport à un référentiel orthonormé XYZ, correspondant à celui de l'aéronef 1 avec X comme l'axe de roulis, Y comme l'axe de tangage et Z comme l'axe de lacet, l'axe longitudinal de chaque turbomoteur est parallèle à X et sera désigné identiquement, et les plans de suspension avant P1 et arrière P2 sont ainsi contenus dans des plans formés par les axes Y et Z.

Usuellement, le plan de suspension avant P1 est situé au niveau du carter intermédiaire 8 du turbomoteur 2 en aval de la soufflante et le plan de suspension arrière P2 est, quant à lui, situé au niveau du carter annulaire 9 relié et entourant le carter d'échappement du turbomoteur 2. La suspension avant et la suspension arrière formant la suspension globale 6 sont symbolisées par des rectangles respectifs 6.1, 6.2 (figures 2 et 3) reliant les carters (ou carénages) concernés du turbomoteur à la poutre d'accrochage du pylône, et les pièces (telles qu'énumérées préalablement) qui les composent ne sont pas représentées puisqu'elles ne font pas partie de l'invention et sont bien connues dans ce domaine (voir les nombreux brevets de la Demanderesse à ce sujet).

La suspension 6 présente, par ailleurs, un troisième plan de suspension intermédiaire P3 dit à sécurité intégrée « fail-safe ». Ce plan de suspension P3 est destiné à pallier la défaillance de la suspension arrière et il est alors parallèlement proche du plan de suspension arrière P2.

Comme on l'a précisé auparavant, en cas de rupture de la suspension arrière, il est nécessaire de reprendre notamment le moment par rapport à l'axe Z désigné moment de dérapage et, pour cela, la suspension intermédiaire 6.3, initialement effacée (« en attente » et en trait pointillé sur la figure 2) tant que le plan de suspension arrière est opérationnel, entre en action (en trait continu sur la figure 3). (Cela est vrai pour les moteurs situés de part et d'autre du fuselage. Pour le moteur situé au-dessus, il convient de remplacer Z par Y et « moment de dérapage » par « moment de tangage »).

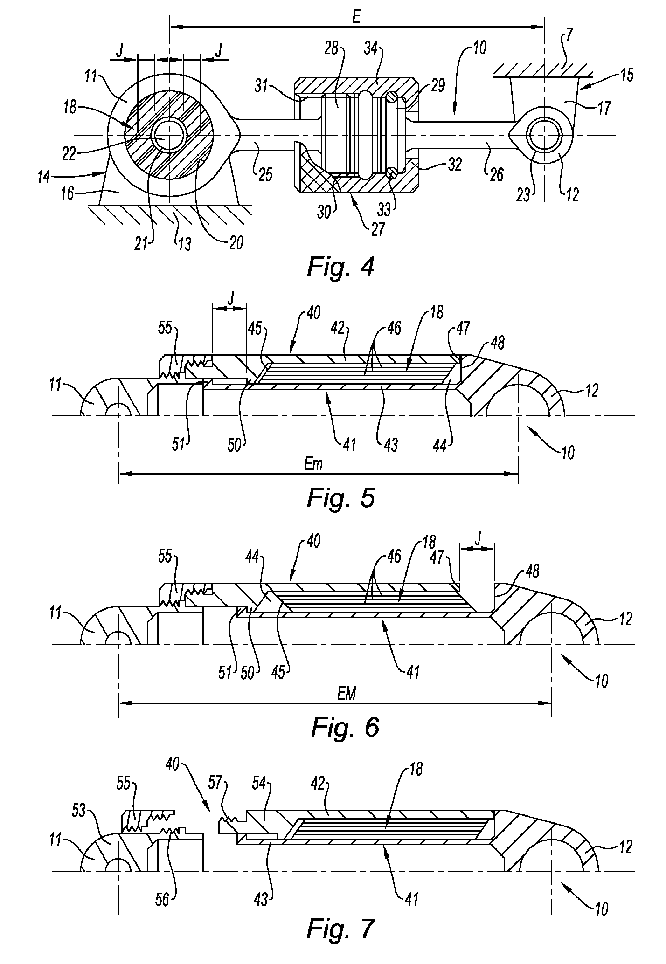

Comme le montrent les figures 4, 5 et 6, la suspension intermédiaire 6.3 se présente structurellement sous la forme d'une bielle de liaison 10 disposée dans le plan YZ et reliant, par ses extrémités opposées 11 et 12, les attaches 14 et 15 situées respectivement sur un carter externe structural 13 du turbomoteur 2, reliant les carters 8 et 9, et sur la poutre du pylône 7 solidaire du fuselage. Ces attaches sont, par exemple, des chapes respectivement 16 et 17 telles qu'illustrées sur la figure 4.

La bielle de liaison 10, par rapport au turbomoteur et au pylône, est montée avec un jeu axial pour qu'aucun effort ne passe par elle tant que le plan de suspension arrière P2 reste intact, c'est-à-dire assure normalement sa fonction. Ce jeu axial « fail-safe » permet d'une part, à la bielle 10 de pouvoir se déplacer axialement entre ses deux extrémités 11, 12 liées aux attaches 14, 15 sans entrer en action et, donc, sans reprendre des efforts, et d'être ainsi en position d'attente. Et, d'autre part, d'absorber les vibrations et déplacements dus notamment au mouvement de l'ensemble propulsif (turbomoteur) par rapport à l'avion.

Dans le premier mode de réalisation illustré sur la figure 4, un élément souple, élastiquement déformable 18, est disposé au niveau de l'une des extrémités 11 et 12 de la bielle de liaison 10, lesquelles extrémités se terminent de façon usuelle en une forme cylindrique annulaire en oeillet. La distance séparant les centres des extrémités annulaires 11, 12 définit l'entraxe E de la bielle 10. On voit, sur la figure 4, que l'élément souple 18 est disposé dans l'extrémité annulaire 11 de la bielle 10, qui coopère avec l'attache 14 à chape 16 du carter correspondant 13 du turbomoteur 2. Cet élément souple 18 présente alors structurellement une forme cylindrique annulaire s'insérant entre la surface latérale interne 20 de l'extrémité annulaire 11 et la surface latérale externe 21 de l'axe d'articulation cylindrique 22 reliant la chape 16 à l'extrémité 11.

Le matériau utilisé pour la réalisation de l'élément souple 18 est, par exemple, un élastomère à base de silicone, notamment susceptible de résister thermiquement aux variations de température. Et l'élasticité intrinsèque de l'élément souple fournie par le matériau introduit le jeu fail-safe J nécessaire pour isoler la bielle et éviter de la charger tant que le plan de suspension arrière P2 est opérationnel. On a représenté sur la figure 4, un exemple du jeu fail-safe J introduit par l'élément souple permettant la variation de l'entraxe E de la bielle sans charger celle-ci, et l'absorption des vibrations et autres déplacements lorsque le plan P2 est intact.

L'extrémité opposée 12 de la bielle 10 se termine également en une forme cylindrique annulaire et elle est articulée à la chape 17 de l'attache correspondante 15 du pylône par l'intermédiaire d'une rotule 23 permettant de passer l'effort dans l'axe longitudinal de la bielle 10 lorsque cela s'avère nécessaire, suite à la rupture de la suspension arrière 6.2.

Ainsi, le déplacement relatif entre les deux extrémités 11 et 12 de la bielle 10 par la variation de son entraxe E (centres des liaisons extrémités avec les chapes correspondantes) est autorisé grâce à l'élasticité de l'élément souple, introduisant le jeu fail-safe J, de sorte qu'aucun effort significatif ne transite par la bielle de liaison lorsque le plan P2 est actif.

Par ailleurs, cette bielle 10 est avantageusement réalisée en deux parties distinctes 25, 26 qui sont cylindriques et reliées coaxialement l'une à l'autre par une bague externe de serrage 27. Les deux parties 25 et 26 sont de longueur sensiblement identique et chacune d'elles se termine, d'un côté, par l'extrémité annulaire correspondante 11, 12 et, de l'autre côté, par un épaulement transversal externe 28, 29 et, les deux épaulements en regard étant reçus dans la bague de serrage 27.

En particulier, la partie 25 avec l'extrémité 11 à élément souple 18 présente en périphérie latérale de son épaulement, un filetage 30 apte à coopérer avec un taraudage correspondant 31 de la bague externe. Et l'autre partie 26 de la bielle 10, avec l'extrémité annulaire 12 à rotule 23, a son épaulement transversal 29 venant en butée contre un fond transversal 32 de la bague en étant axialement maintenu l'un par rapport à l'autre par un anneau intermédiaire 33 entre l'épaulement 29 et la paroi latérale cylindrique 34 de la bague externe 27.

Le vissage de celle-ci par son taraudage 31 sur le filetage 30 de l'épaulement 28 de la partie 25 permet de régler parfaitement l'entraxe E de la bielle 10 en fonction de l'écartement entre les chapes 16, 17 des attaches 14, 15 prévues sur le turbomoteur 2 et le pylône 7. En plus de cette possibilité de réglage, le caractère composé de la bielle 10 en deux parties 25, 26 sensiblement égales facilite grandement son montage (et son démontage) dans l'espace restreint entre le carter concerné du turbomoteur et la poutre du pylône. Chaque partie 25 et 26 peut être associée séparément à son attache puis, ensuite, elles sont réunies coaxialement avec l'entraxe appropriée E par la bague de serrage 27 qui est extérieurement moletée.

Dans le second mode de réalisation illustré sur les figures 5, 6 et 7, au lieu de maintenir le jeu J par l'élément souple 18 entre l'une des chapes des attaches et l'axe d'articulation correspondant, le jeu axial fail-safe J est intégré directement à la bielle de liaison 10 lui permettant une variation de sa longueur (entraxe E) dans le jeu prédéterminé, sans y faire transiter un quelconque effort.

Pour cela, la bielle de liaison 10 se compose, là aussi, de deux parties distinctes 40, 41 mais qui sont agencées de façon télescopique l'une dans l'autre, coaxialement. Une première partie tubulaire externe 40 est définie pour se terminer par l'extrémité annulaire 11 apte à s'articuler à la chape 16, non représentée, de l'attache du carter du turbomoteur 2. Et une seconde partie cylindrique interne 41, de préférence tubulaire en raison du gain de masse, est engagée dans la première partie tubulaire 40 et se termine par l'autre extrémité annulaire 12 apte à s'articuler à la chape 17, non représentée, de l'attache du pylône 7. Les articulations non illustrées des extrémités aux chapes sont, par exemple, à axe cylindrique et à rotule, voire les deux à rotule.

Entre les parois latérales 42, 43 des deux parties externe 40 et interne 41 est prévu un espace intermédiaire annulaire 44 dans lequel est agencé l'élément souple 18 qui va autoriser la variation de l'entraxe E de la bielle 10 entre les centres de ses extrémités 11 et 12. L'élément souple 18 se présente alors sous une forme de manchon cylindrique annulaire 45 se logeant dans l'espace intermédiaire 44 sur une majeure partie de sa longueur et rapporté fixement sur les surfaces en regard des parois latérales 42, 43 des parties 40 et 41. Pour obtenir la souplesse axiale souhaitée et le coulissement libre de la bielle 10 sans passage d'effort dans celle-ci, outre le choix du matériau en élastomère, l'élément manchonné 45 est formé de plusieurs couches annulaires concentriques 46 (cinq sont par exemple représentées sur les figures 5 à 7). Ces couches sont soit indépendantes les unes des autres en étant emboîtées successivement les unes dans les autres ou sont obtenues par l'enroulement d'une bande jusqu'au nombre de couches souhaité en constituant l'élément 18.

Dans la position de la bielle de liaison 10 à entraxe minimal Em entre ses extrémités 11,12, comme le montre la figure 5, on voit le jeu axial fail-safe J rendu possible entre les deux parties 40 et 41 de la bielle 10 par l'élément manchonné 45 alors déformé en cisaillement au maximum d'un côté. Pour cela, une face transversale 47, par exemple de la partie externe tubulaire, est en butée contre un épaulement 48 de la partie interne. Le jeu maximum J introduit par la souplesse de l'élément se trouve alors entre deux épaulements annulaires respectivement externe 50 et interne 51 des parties distinctes 40 et 41, espacés l'un de l'autre et opposés au contact par butée de la face transversale 47 et de l'épaulement concerné 48.

Inversement, dans la position de la bielle de liaison 10 à entraxe maximal EM, comme le montre la figure 6, l'élément manchonné 45 est alors déformé en cisaillement au maximum de l'autre côté. Dans ce cas, les épaulements 50 et 51 sont en butée axiale l'un contre l'autre, et la face transversale 47 de la partie externe 40 se trouve éloignée de l'épaulement 48 de la partie interne 41 en définissant le jeu J.

Ces deux positions limites (figures 5 et 6) déterminent le jeu axial fail-safe J introduit par l'élément souple 18 manchonné 45. De la sorte, la longueur de la bielle de liaison 10 peut varier entre ces positions sans soumettre la bielle à un quelconque effort tant que le plan de suspension arrière P2 est actif, et est toujours adaptée à l'écartement entre les attaches respectives 14, 15 malgré les vibrations de l'ensemble propulsif, et ce jusqu'à ce que la bielle rentre en butée.

En fonctionnement normal, c'est-à-dire avec un plan de suspension arrière P2 opérationnel comme sur la figure 2 (avec flèche symbolisant les efforts dans P2), le plan de suspension intermédiaire P3 est neutre et sa suspension 6.3 est, à cet effet, représentée par le rectangle en trait pointillé. La bielle 10, quoique pouvant se débattre axialement dans le jeu fourni par l'élément souple, ne contribue pas à reprendre un quelconque effort et est considérée comme étant en attente, inactive. L'élément souple 18, sollicité en compression/traction (figure 4) ou en cisaillement (figures 5 et 6), se déforme librement et absorbe les déplacements et/ou vibrations imposés dus notamment au fonctionnement de l'ensemble propulsif. La longueur de la bielle 10 (entraxe) s'adapte en conséquence à la distance variable entre les attaches du carter externe 13 concerné du turbomoteur 1 et de la poutre du pylône 7.

En cas de rupture de la suspension 6.2 du plan arrière P2, alors représenté en trait pointillé avec une croix en figure 3, la suspension 6.3 du troisième plan intermédiaire P3 agit en étant indiqué par un rectangle en trait continu sur cette figure (avec flèche symbolisant les efforts dans P3). La bielle 10 entre en butée par la suppression du jeu axial fail-safe J introduit par l'élément souple élastiquement déformable 18. Les efforts passent et sont repris par la bielle de liaison 10 en étant transmis par les différentes zones de contact (articulations, épaulements et faces transversales formant butée, etc....) de la bielle et dans l'axe de celle-ci. De la sorte, le moment de dérapage par rapport à Z est repris permettant de maintenir au mieux le turbomoteur 2.

Par ailleurs, on remarque également que la bielle de liaison 10 de ce second mode de réalisation est démontable. Pour cela, la partie externe tubulaire 40, par exemple, se compose de deux sous-parties, une première sous-partie 54 correspondant à la paroi latérale externe 42 reliée à celle 43 de la partie interne 41 au moyen de l'élément souple manchonné 45, et une seconde sous-partie 53 correspondant à l'extrémité annulaire 11. Ces deux sous-parties 53 et 54 sont assemblées l'une à l'autre par l'intermédiaire là aussi d'une bague de serrage moletée 55 se vissant, d'une part, sur un filetage 56 de l'extrémité 11 (sous-partie 53) et, d'autre part, sur un filetage 57 en bout de la paroi latérale 42 (sous-partie 54). Une fois vissée, la bague 55 met en butée axiale les deux sous-parties 53, 54. Ainsi, le montage et le démontage de la bielle 10 sont rendus plus aisés pour les raisons précitées.

En résumé, une telle bielle à élément souple élastiquement déformable agencée dans le plan intermédiaire permet de définir un « chemin d'attente de sécurité (fail-safe) » entre les deux points distants de la bielle, d'atténuer les vibrations et de faciliter le montage sur les moteurs, et, lorsque le plan de suspension arrière se rompt, de supporter le moteur concerné.

## Revendications

1. Combinaison entre turbomoteur, pylône de fuselage et suspension du turbomoteur du type comprenant, perpendiculairement à l'axe longitudinal du turbomoteur, un plan de suspension avant (P1) situé au niveau d'un carter intermédiaire du turbomoteur et reliant celui-ci au pylône, un plan de suspension arrière (P2) situé au niveau du carter d'échappement du turbomoteur et reliant celui-ci au pylône, et un plan de suspension intermédiaire à sécurité intégrée (P3), situé entre les plans avant et arrière et comportant au moins une bielle de liaison (10) entre le turbomoteur (2) à carter externe structural (13) et le pylône(7), montée avec un jeu prédéterminé sur le turbomoteur rendant inopérante la bielle de liaison tant que la suspension du plan arrière fonctionne,
**caractérisé par le fait que** la bielle de liaison (10) du plan de suspension intermédiaire (3) est agencée entre le carter externe structural (13) et le pylône (7), et qu'un élément (18) réalisé en un matériau souple est associé à ladite bielle de liaison (10) de manière à introduire, par son caractère élastiquement déformable, ledit jeu prédéterminé.

2. Combinaison selon la revendication 1, dont le matériau souple de l'élément (18) est un élastomère ou analogue.

3. Combinaison selon l'une des revendications 1 ou 2, dont ledit élément souple (18) introduisant le jeu prédéterminé présente une forme cylindrique annulaire et est logé dans l'une des extrémités (11, 12) de la bielle de liaison (10), articulée à une attache complémentaire de l'un du turbomoteur ou du pylône.

4. Combinaison selon la revendication précédente, dont l'extrémité (11) de la bielle de liaison (10) portant l'élément souple annulaire (18) est articulée autour d'un axe (22) à la chape de l'attache (14) solidaire du turbomoteur, tandis que son extrémité opposée (12) est articulée par une rotule (23) à une attache (15) du pylône.

5. Combinaison selon l'une des revendications 1 à 4, dont la bielle de liaison (10) est démontable et se compose de deux parties distinctes (25-26, 53-54) respectivement articulées au turbomoteur et au pylône et reliées entre elles de façon axialement réglable.

6. Combinaison selon la revendication précédente, dont la liaison alignée et réglable entre les deux parties de la bielle (10) est obtenue par une bague externe de vissage (27, 55) entourant les extrémités en regard des deux parties de la bielle (10).

7. Combinaison selon l'une des revendications 1 ou 2, dont ledit élément souple (18) introduisant le jeu prédéterminé est intégré à la bielle de liaison (10) de manière à permettre une libre variation de longueur de celle-ci, correspondant au jeu prédéterminé.

8. Combinaison selon la revendication précédente 7, dont la bielle de liaison (10) se compose de deux parties tubulaires télescopiques (40, 41) entre lesquelles est agencé l'élément souple (18) de forme cylindrique annulaire et qui sont articulées à leurs extrémités opposées respectivement au turbomoteur et au pylône.

9. Combinaison selon la revendication 8, dont l'élément souple (18) se présente sous la forme de couches cylindriques concentriques (46) autorisant le libre coulissement axial des deux parties tubulaires (40, 41) l'une par rapport à l'autre et la variation de longueur de la bielle, correspondant au jeu prédéterminé souhaité, entre des butées axiales (47-48, 50-51) prévues sur lesdites parties.

10. Combinaison selon l'une des revendications 8 et 9, dont au moins l'une des parties tubulaires (40, 41) de la bielle de liaison (10) est démontable et est constituée d'une sous-partie d'extrémité (53) apte à être fixée à une attache du turbomoteur et d'une sous-partie de paroi latérale annulaire, lesdites sous-parties d'extrémité et de paroi étant reliées l'une à l'autre par une bague externe de vissage (55).

## Patentansprüche

1. Kombination aus Turbomotor, Rumpfträger und Aufhängung des Turbomotors des Typs, der senkrecht zu der Längsachse des Turbomotors eine vordere Aufhängungsebene (P1), die sich auf dem Niveau eines Zwischengehäuses des Turbomotors befindet und diesen mit dem Träger verbindet, eine hintere Aufhängungsebene (P2), die sich auf dem Niveau des Auspuffgehäuses des Turbomotors befindet und diesen mit dem Träger verbindet, und eine Zwischenaufhängungsebene mit integrierter Sicherheit (P3), die sich zwischen der vorderen Ebene und der hinteren Ebene befindet und mindestens ein Verbindungspleuel (10) zwischen dem Turbomotor (2) mit externem Strukturgehäuse (13) und dem Träger (7) aufweist, die mit einem vorbestimmten Spiel auf dem Turbomotor montiert ist, die das Verbindungspleuel unwirksam macht, solange die Aufhängung der hinteren Ebene funktioniert, aufweist,
**dadurch gekennzeichnet, dass** das Verbindungspleuel (10) der Zwischenaufhängungsebene (3) zwischen dem externen Strukturgehäuse (13) und dem Träger (7) eingerichtet ist, und dass ein Element (18), das aus einem biegsamen Werkstoff hergestellt ist, mit dem Verbindungspleuel (10) derart verbunden ist, dass durch seinen elastisch verformbaren Charakter das vorbestimmte Spiel eingeführt wird.

2. Kombination nach Anspruch 1, deren biegsamer Werkstoff des Elements (18) ein Elastomer oder analog ist.

3. Kombination nach einem der Ansprüche 1 oder 2, deren biegsames Element (18), das das vorbestimmte Spiel einführt, eine ringförmige Zylinderform aufweist und in einem der Enden (11, 12) des Verbindungspleuels (10) an eine ergänzende Befestigung entweder des Turbomotors oder des Trägers angelenkt untergebracht ist.

4. Kombination nach dem vorhergehenden Anspruch, deren Ende (11) des Verbindungspleuels (10), das das ringförmige biegsame Element (18) trägt, um eine Achse (22) an der Befestigungsgabel (14), die fest mit dem Turbomotor verbunden ist, angelenkt ist, während ihr entgegengesetztes Ende (12) durch ein Kugelgelenk (23) an einer Befestigung (15) des Trägers angelenkt ist.

5. Kombination nach einem der Ansprüche 1 bis 4, deren Verbindungspleuel (10) demontierbar ist und aus zwei getrennten Teilen (25-26, 53-54) besteht, die jeweils an dem Turbomotor und an dem Träger angelenkt und untereinander axial einstellbar verbunden sind.

6. Kombination nach dem vorhergehenden Anspruch, deren gefluchtete und einstellbare Verbindung zwischen den zwei Teilen des Pleuels (10) durch einen externen Schraubring (27, 55), der die Enden gegenüber den zwei Teile des Pleuels (10) umgibt, erzielt wird.

7. Kombination einem der Ansprüche 1 oder 2, deren biegsames Element (18), das das vorbestimmte Spiel einführt, in das Verbindungspleuel (10) derart eingebaut ist, dass es dessen freie Längenvariation, die dem vorbestimmten Spiel entspricht, erlaubt.

8. Kombination nach Anspruch 7, deren Verbindungspleuel (10) aus zwei teleskopischen röhrenförmigen Teilen (40, 41) besteht, zwischen welchen das biegsame Element (18) mit ringförmiger Zylinderform eingerichtet ist, und die an ihren jeweiligen gegenüberliegenden Enden an dem Turbomotor und dem Träger angelenkt sind.

9. Kombination nach Anspruch 8, deren biegsames Element (18) die Form konzentrischer zylindrischer Schichten (46) aufweist, die das freie axiale Gleiten der zwei röhrenförmigen Teile (40, 41) zueinander und die Längenvariation des Pleuels, die dem vorbestimmten gewünschten Spiel entspricht, zwischen axialen Anschlägen (47-48, 50-51), die auf den Teilen vorgesehen sind, gestatten.

10. Kombination nach einem der Ansprüche 8 und 9, von der mindestens einer der röhrenförmigen Teile (40, 41) des Verbindungspleuels (10) demontierbar ist und aus einem Endunterteil (53) besteht, der an einer Befestigung des Turbomotors befestigt werden kann, und aus einem ringförmigen Seitenwandunterteil, wobei das Endunterteil und das Wandunterteil miteinander durch einen externen Schraubring (55) verbunden sind.

## Claims

1. Combination between a turboshaft engine attached to a pylon of the fuselage of an aircraft and a suspension system of the type including, at right angles to the longitudinal axis of the turboshaft engine, a front suspension plane (P1) located at an intermediate turboshaft engine casing and connecting same to the pylon, a rear suspension plane (P2) located at the exhaust casing of the turboshaft engine and connecting same to the pylon, and a failsafe intermediate suspension plane (P3) located between the front and rear planes and comprising at least one connecting rod (10) between the turboshaft engine (2) having an outer fan duct (13) and the pylon (7), said connecting rod being mounted on the turboshaft engine with a predetermined clearance that renders the connecting rod inoperable while the suspension system of the rear plane is operating, **characterized in that** the connecting rod (10) of the intermediate suspension plane (3) is arranged between the outer fan duct (13) and the pylon (7), and **in that** an element (18) made of a flexible material is associated with said connecting rod (10) so as to introduce said predetermined clearance by means of the elastically deformable nature thereof.

2. The combination as claimed in claim 1, of which the flexible material of the element (18) is an elastomer or similar.

3. The combination as claimed in either of claims 1 or 2, of which said flexible element (18) introducing the predetermined clearance has a ring-shaped cylindrical form and is housed in one of the ends (11, 12) of the connecting rod (10), articulated at a complementary fastening of either the turboshaft engine or the pylon.

4. The combination as claimed in the preceding claim, of which the end (11) of the connecting rod (10) carrying the ring-shaped flexible element (18) is articulated about an axis (22) at the lug of the fastening (14) which is integral with the turboshaft engine, while the opposite end (12) thereof is articulated by means of a ball-and-socket joint (23) at a fastening (15) of the pylon.

5. The combination as claimed in one of claims 1 to 4, of which the connecting rod (10) can be dismantled and is made up by two distinct parts (25-26, 53-54) which are respectively articulated at the turboshaft engine and at the pylon and are connected together in an axially adjustable manner.

6. The combination as claimed in the preceding claim, of which the aligned and adjustable connection between the two parts of the rod (10) is obtained by an outer threaded ring (27, 55) surrounding the facing ends of the two parts of the rod (10).

7. The combination engine as claimed in either of claims 1 or 2, of which said flexible element (18) introducing the predetermined clearance is incorporated in the connecting rod (10) so as to allow a free variation in the length of same, corresponding to the predetermined clearance.

8. The combination as claimed in preceding claim 7, of which the connecting rod (10) is made up by two telescopic tubular parts (40, 41) between which is arranged the flexible element (18) with the ring-shaped cylindrical form and which are articulated at their opposite ends at the turboshaft engine and at the pylon respectively.

9. The combination as claimed in claim 8, of which the flexible element (18) is in the form of concentric cylindrical layers (46) allowing the two tubular parts (40, 41) to slide freely in an axial manner with respect to each other and allowing the variation in the length of the rod, corresponding to the desired predetermined clearance, between the axial stops (47-48, 50-51) provided on said parts.

10. The combination as claimed in either of claims 8 or 9, of which at least one of the tubular parts (40, 41) of the connecting rod (10) can be dismantled and is made up by an end sub-part (53) capable of being attached to a fastening of the turboshaft engine and by a ring-shaped lateral wall sub-part, said end and wall sub-parts being connected to each other by an outer threaded ring (55).
